# EUROPEAN PATENT SPECIFICATION

(11) **EP 1 936 269 B1**
(45) Date of publication and mention of the grant of the patent: **12.06.2013**
(21) Application number: 07254698.9
(22) Date of filing: 04.12.2007
(51) Int. Cl.: F23C 5/08, F23C 6/04

(54) **Combustion furnace and combustion method using oxy-fuel reburn burners**
Verbrennungskessel und Verbrennungsverfahren mit "Oxyfuel-Reburn"-Brenner
Chaudière à combustion et procédé de combustion avec brûleurs de reburning à oxygène

(30) Priority: 11.12.2006 US 874326 P; 15.11.2007 US 940575
(43) Date of publication of application: 25.06.2008
(73) Proprietor: Babcock & Wilcox Power Generation Group, Inc., Barberton OH 44203-0351 (US)
(72) Inventor: Sarv, Hamid, Canton, OH 44708 (US)
(74) Representative: Meldrum, David James

(56) References cited:
- JP-A- 59 024 106
- US-A- 6 085 674
- US-A1- 2003 091 948
- US-A1- 2006 257 800

## Description

**FIELD OF THE INVENTION**

The present invention relates in general to a method and apparatus for combusting a fossil fuel such as coal, and in particular to new and useful method and apparatus for reducing the formation of nitrogen oxides during the combustion process.

**BACKGROUND OF THE INVENTION**

The combustion of fossil fuels generates oxides of nitrogen, such as NO and NO₂, cumulatively referred to as NOₓ. Emissions of NOₓ in the atmosphere are increasingly becoming a health and environmental concern. The U.S. Environmental Protection Agency (EPA) has determined that regulation of NOₓ emissions is necessary and appropriate, thereby creating an urgent need to develop increasingly more efficient NOₓ emissions control technologies.

In a conventional fossil fuel combustor, combustion air and a fossil fuel are mixed and provided to a main flame zone within a furnace. NOₓ, a byproduct of the combustion, is formed when naturally occurring nitrogen in the fuel and/or molecular nitrogen in the combustion air oxidize.

Fuel reburning is a technology capable of reducing NOₓ emissions. The technology includes providing an oxygen-deficient secondary combustion reburn zone above an oxygen-rich main combustion zone. Supplementary fuel provided to the reburn zone generates hydrocarbon radicals, amines, and cyanic species that react with incoming main combustion products to convert NOₓ to N₂. Additional air may then be provided by overfire air (OFA) ports, placed above the reburn zone, to combust the remaining fuel and combustible gases.

Fuel reburn applications generally utilize flue gas recirculation (FGR) technology to reduce NOₓ emission. Flue gas from downstream of boiler is recirculated via conduits back to the secondary combustion zone as an oxygen-lean carrier gas, thereby maintaining a fuel-rich environment and enhancing the fuel penetration and mixing with the main combustion zone gases and products. Quenching, resulting from utilizing flue gas from downstream of the boiler outlet as a carrier gas, further inhibits NOₓ formation in the reburn zone.

Pulverized coal-fired boilers and devices similar thereto generally use two or three types of gaseous streams. The first is the primary air stream, typically constituting from about 10 to 20% percent of the overall amount of gas introduced into the combustion chamber. The main purpose of the primary air is to convey fuel (e.g., pulverized coal) to the burner. The flow rate is therefore kept sufficient to achieve the function of particle transport. Based on this primary purpose, the transport gas need not contain an oxidant, although air is generally used due to cost and availability.

The secondary stream is generally an air stream injected at the burner level, around or near the primary air/fuel mixture. The primary purpose of this stream is to provide oxidant to the fuel for combustion. Conventionally, this stream has been air due to cost and availability.

A third gaseous stream, generally used in air staging application is injected downstream of the burners in a secondary combustion zone. This third stream, generally injected through overfire air (OFA) port, has conventionally been air due to cost and availability. In air staging application use of OFA port has shown to reduce NOₓ by about 20 to about 35 percent. Staging generally involves operating the main combustion zone fuel-rich, sub-stoichiometric in the range of about 0.75 to about 0.95, and a second zone fuel-lean, super-stoichiometric in the range of about 1.10 to about 1.25.

An additional NOₓ reduction technique involves injecting air and a supplementary fossil fuel above a generally oxidant rich primary combustion zone, stoichiometric ratio of at least 1.0, to create a locally oxidant deficient re-burn zone. The supplement fuel generates reactive species which inhibit the production of NOₓ. Re-burning fuel generally is injected into a zone having flue gas temperatures of about 1250° to about 1650°C (about 2300° to about 3000°F), and the efficiency of NOₓ reduction has been shown to generally increase with an increase in injection temperature and longer re-burn zone residence times. Fuel re-burning techniques can result in up to 60% NOₓ reduction depending on the commercial systems. Additional air may then be introduced above the re-burn zone through overfire air ports to burn out the combustible matter.

One approach for reducing NOₓ-reactive compounds using a re-burn burner is described U.S. Patent Publication No. 2006/0257800 A1 (Sarv). Fuel is combusted with O₂ by Oxy-fired burners in a fuel rich re-burn zone downstream from a main combustion zone operated in a fuel lean manner with air as the oxidant gas.

US 6085674 discloses a cyclone-fired furnace modified to operate in a three stage combustion mode to minimise NOₓ emissions. The first two stages both utilise a cyclone style burner, one downstream from the other, operating at partial oxidation wherein the oxidant is air. Downstream from the cyclones, and located on the same wall face, over fire air is provided to complete the third stage of combustion. US 6085674 however is limited by air as the oxidant and thus by the diluting effect of Nitrogen contained in air. A need exists to eliminate the necessity of using air as the oxidant in every stage of a stage combustion arrangement.

US 2003/0091948 discloses a method of furnace combustion wherein the flowrate of combustion air to the burners is reduced and oxidant is selectively fed into one or more burners. The method appears to suggest that by varying oxygen and fuel concentration amongst the burners in a non-uniform manner, greater control of the combustion by-product can be achieved. US 2003/0091948 however is limited as it ignores the benefits of multi-staged combustion and teaches a means of fine tuning one or more burners instead of optimal staging combustion to eliminate the formation of NOx. A need exists to provide a means of optimally staging combustion in a multi-burner furnace to eliminate or significantly reduce NOx emissions.

**SUMMARY OF THE INVENTION**

Aspects of the invention are defined in the appended claims.

Briefly, examples of the disclosure provide processes and equipment for fossil fuel combustion wherein the NOₓ byproduct of combustions is greatly reduced, potentially eliminating the need for downstream techniques such as SCR and SNCR.

In one example, there is provided a method for reducing the formation of nitrogen oxides emissions from the combustion of a fossil fuel in a nitrogen laden gas. The method comprises the steps of providing a furnace wherein fossil fuel is combusted, providing multiple rows of air fired burners, providing a row of oxy-fired reburn burners downstream of the last row of the air fired burners, providing a row of over fire air ports downstream of the row of oxy-fired reburn burners, supplying the multiple rows of air fired burners with air and a fossil fuel and a stoichiometry of less than 1.0, supplying the oxy fired reburn burners with a fossil fuel and a gaseous stream comprising at least 90% oxygen in sufficient quantity to produce a reburn stoichiometry between about 0.35 and 0.65, and supplying the row of overfire air ports with sufficient air to produce a combustion stoichiometry above 1.10 downstream of the overfire air ports.

According to the present disclosure there can be provided a combustion furnace comprising a plurality of air fired fossil fuel burners arranged in at least two rows, the improvement comprising replacing the uppermost row of air fired burners with a row of oxy-fired reburn burners, and wherein the lowermost row of burners is supplied with air and fossil fuel at a stoichiometry of less than 1.0.

In another example there is provided a method of controlling nitrogen oxides emissions resulting from the combustion of a fossil fuel in a utility boiler, the method including the step of staging combustion to prevent the formation of nitrogen oxides precursors by providing at least two rows of air fired burner, each of the burners being supplied with air and a fossil fuel and combusted at a stoichiometry of less than 1.0, and by providing a row of overfire air ports downstream of the last row of the at least two rows of air fired burners, wherein the overfire air ports provide sufficient air to create a combustion stoichiometry of greater than 1.10, the improvement comprising providing a oxy-fired reburn burner downstream of air fired burners and upstream of the over fire air ports, providing the oxy-fired reburn burner with a fossil fuel and a gaseous steam comprising at least 90% oxygen, and operating the oxy-fired reburn burner to produce a combustion stoichiometry of between about 0.35 and 1.0 at the outlet of the oxy fired reburn burner.

The various features of novelty which characterize the present invention are pointed out with particularity in the claims annexed to and forming a part of this disclosure. For a better understamding of the invention, its operating advantages and specific benefits attained by its uses, reference is made to the accompanying drawings and descriptive matter in which the preferred embodiments of the invention are illustrated.

**BRIEF DESCRIPTION OF THE DRAWINGS**

FIG. 1 is a perspective view of one embodiment of a furnace according to the present invention in which all burners are positioned in one wall of the unit.

FIG. 2 is a perspective view of another embodiment of a furnace according to the present invention in which burners are located in opposing walls of the unit.

FIG.3 is a perspective view of yet another embodiment of a furnace according to the present invention in which all burners are positioned in a tangential firing arrangement.

FIG. 4 is a side view, portions cut away, of a single wall embodiment of a furnace according to the present invention in operation.

Similar reference numerals refer to similar elements hereinthroughout.

DETAILED DESCRIPTION OF THE PREFERRED EMBODIMENTS

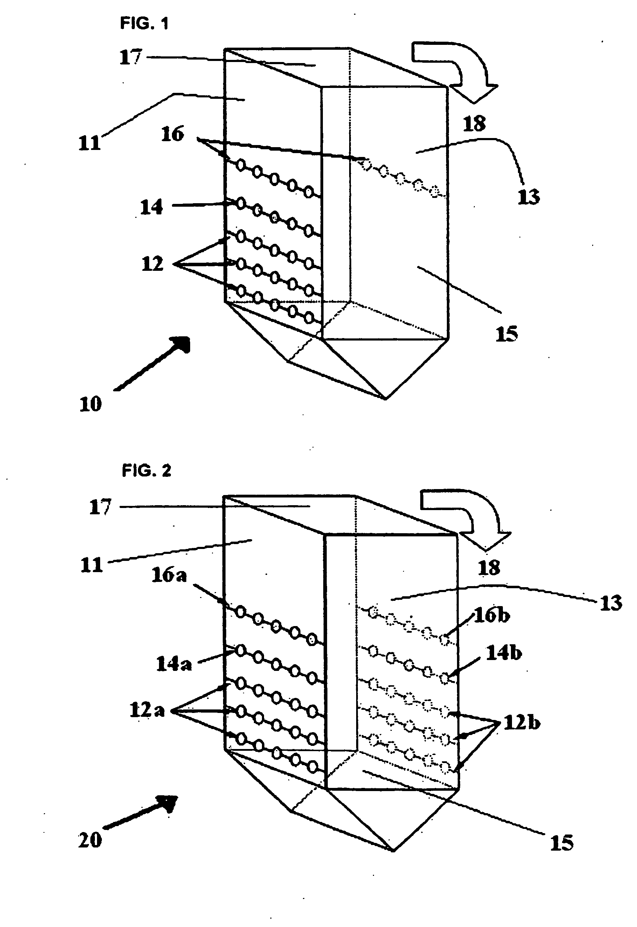

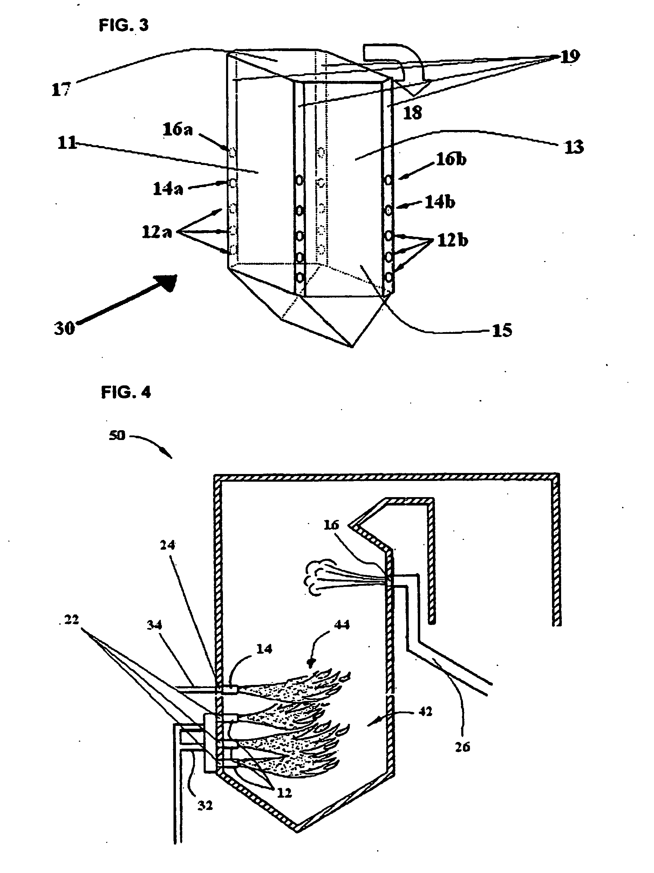

The system and process of the disclosure involve air-staged furnace units capable of burning solid fuels. FIGs. 1-3 portray three relatively common solid fuel furnace configurations, each of which can be used in the present invention. Specifically, FIG. 1 is a schematic representation of a single wall-fired unit 10, FIG. 2 is a schematic representation of a opposed wall-fired unit 20, and FIG. 3 is a schematic representation of a tangential (or corner fired) unit 30. Each of these embodiments provides front wall 11, rear wall 13, and side walls 15 and 17. Tangential unit 30 also includes four corner walls 19.

Single wall-fired unit 10 incorporates primary burners 12, re-burn burners 14 and OFA ports 16 in front wall 11. Optionally, as shown in Fig. 1, additional OFA ports may be located in rear wall 13 of the single wall-fired unit. Opposed wall-fired unit 20 incorporates primary burners 12a, re-burn burners 14a and OFA ports 16a in front wall 11 and incorporates primary burners 12b, re-burn burners 14b, and OFA ports 16b in rear wall 13. Tangential unit 30 incorporates primary burners 12a and 12b, re-burn burners 14a and 14b, and OFA ports 16a and 16b in opposing corner walls 19; for the sake of clarity, only those burners and ports in one set of opposing corner walls 19 have been shown. Variations on these arrangements also are possible.

In each design, the upstream (lower) rows of ports incorporate primary burners 12, i.e., burners configured to burn fuel in the presence of an oxidant gas such as air that includes a relatively large percentage of N₂, while a downstream row of ports incorporates re-burn burners 14 that employ O₂-enriched oxidant gas. The term row, used hereinthroughout denotes an imaginary line connecting a series of similar burners. While variation in individuals burner elevation may occur in practice, minor variation are understood to be within the scope of the present invention.

OFA ports 16 are generally located downstream of re-burn burners 14. Once the output of the furnace, flue gas 18, passes OFA ports 16, it is directed out of the furnace. While the present invention provides exceptional NOₓ removal, making additional processing steps associated with SCR or SCNR unnecessary to achieve current NOₓ emission regulation levels, use of such subsequent processing step may prove beneficial if cap and trade systems for NOₓ emissions become more established.

The process of the disclosure and operation of the furnace system now are described in reference to FIG. 4, which portrays an alternative construction for a single wall-fired furnace unit. In this description, pulverized coal (PC) is used as an exemplary solid fuel, although this is to be considered non-limiting because the ordinarily skilled artisan is aware of a variety of solid fuels that can be combusted in such units.

A combined stream of PC and oxidant gas can be supplied to furnace unit 50 via first conduit 32 and enter primary burners 12 disposed in upstream ports 22. The feed stream typically is provided at sufficient velocity to entrain the pulverized coal. The oxidant gas component of the feed stream, typically air, generally comprises a significant amount of N₂, typically in the 70 percentile. Combustion of this feed stream forms first combustion zone 42. The combustion zone 42 generally creates a fuel rich environment, i.e., one which has a stoichiometric ratio of less than 1.0, preferably between about 0.8 to 1.0. In alternative embodiments, the stoichiometry of the first combustion zone 42 can be above 1.0 and up to about 1.10.

A second combined stream of PC and oxidant gas can be supplied to unit 50 via second conduit 34 and enter re-burn burner 14 disposed in downstream port 24. The feed stream typically is provided at sufficient velocity to entrain the pulverized coal. Oxidant gas in this stream generally has a reduced concentration of N₂, preferably less than 50%, wherein the reduced concentrations are a result of combining recycled flue gas and a relatively pure oxygen stream, and most preferably essentially free of N₂ in embodiments wherein a steam of relatively pure oxygen is utilized.

Where the oxidant gas is essentially pure O₂, it can be delivered by means such as a spud or lance; see, for example, U.S. Patent Publ. No. 2006/0257800 A1 wherein a multi-bladed injection device for the introduction of O₂ to re-burn burner 14 is described.

Combustion of the feed stream forms a second combustion zone 44 in the vicinity of the re-burn burner with an increased local flame temperature. In certain embodiments, the second feed stream can include O₂, and/or re-circulated flue gas. Conduits can be installed anywhere along the boiler system to allow desired quantities of flue gas to be re-circulated into unit 50. Re-circulated flue gas can be premixed with O₂ or injected directly into second combustion zone 44.

The stoichiometric ratio at re-burn burner 14 generally depends on the oxidant gas composition and feed stream flow rate. Preferably re-burn burner 14 is operated fuel-rich, such that the stoichiometric ratio is below 1.0 and preferably between about 0.35 and 0.85. For a high-end re-burn burner wherein non-oxidizing gases such as N₂, H₂O and CO₂ are introduced to re-burn burner 14 via transport air and/or one or more recycled flue gas streams, a stoichiometry in the range of 0.65 and 0.85 is preferred. Whereas in low-end re-burn burner, wherein minimal introduction of non-oxidizing gases is observed, a stoichiometry in the range of about 0.35 to about 0.65 is preferred. In all cases the stoichiometry of re-burn burner 14 is maintained at or below that which would be utilized in an otherwise equivalent air-fired re-burn burner. As a system the combined stoichiometric ratio of the combustion zones resulting from primary burners 12 and re-burn burner 14 preferably is maintained between about 0.6 and 1.0 for maximum NOₓ reduction.

High local concentrations of flame radicals are generated due to the extremely high temperatures and high O₂ concentrations present in second combustion zone 44, and many of these are reactive with NOₓ species.

Additional oxidizing gas is brought to unit by conduit 26 and introduced downstream from second combustion zone 44 via OFA port 16. Although the composition of this oxidizing gas can vary significantly, air typically is used for availability and cost considerations. The oxidizing gas introduced via OFA port 16 raises the overall combustion stoichiometry within unit 50 to at least about 1.10, which assists in burning out combustibles such as chars, hydrocarbons, and CO. OFA port 16 commonly can be located at a position where the flue gas temperature is about 980° to about 1550°C (about 1800° to 2800°F) to facilitate achieving complete combustion.

In an alternative embodiment of the present invention, an existing furnace can be retrofitted so as to have the above-described configuration. In other words, by converting a downstream row of existing burners to O₂-fired re-burn burners, an existing furnace need not have new or additional burner ports installed. Thus, the units shown in FIGs. 1 to 4 can be viewed either as newly manufactured units or previously manufactured units having undergone retrofitting.

One advantage of the present system and process is that overall use of O₂, either as pure gas or as an enriching component of other gas(es), is reduced by limiting its use to deeply staged re-burn burners in the combustion zone as opposed to, e.g., technologies that use it throughout the main combustion zone. More specifically, total O₂ flow requirement for the re-burn burners is equivalent to or less than about 23% of the substituted air mass flow rate.

All percentages used hereinthroughout are intended to represent percent by volume unless a contrary intention is expressly indicated.

## Claims

1. A method of reducing the formation of nitrogen oxides emissions from the combustion of a fossil fuel in a nitrogen laden gas comprising
providing a furnace wherein fossil fuel are combusted,
providing one or more rows of air fired burners (12, 12a, 12b),
providing a row of oxy-fired reburn burners (14, 14a, 14b) downstream of the air fired burners (12, 12a, 12b), providing a row of over fire air ports (16, 16a, 16b) downstream of the row of oxy-fired reburn burners (14, 14a, 14b).
supplying the one or more rows of air fired burners (12, 12a, 12b) with air and a fossil fuel at a stoichiometry of less than 1.0,
supplying the oxy-fired reburn burners (14, 14a, 14b) with a fossil fuel and a gaseous stream comprising at least 90 percent oxygen,
**characterised in that**
the oxy-fired reburn burners (14, 14a, 14b) are supplied with the fossil fuel and the gaseous stream comprising at least 90 percent oxygen in sufficient quantity to produce a reburn stoichiometry between about 0.35 and 0.65, and **in that**
the row of overfire air ports (16, 16a, 16b) is supplied with sufficient air to produce a combustion stoichiometry above 1.10 downstream of the overfire air ports (16, 16a, 16b)

2. The method of claim further comprising the step of operating the furnace as a single wall firing unit, wherein the air fired burners (12, 12a, 12b) and oxy-fired reburn burners (14, 14a, 14b) are located on a single wall of the furnace and a over fire air port (16, 16a, 16b) is located above the oxy-fired reburn burners (14, 14a, 14b).

3. The method of claim further comprising the step of operating the furnace as a opposed wall firing unit, wherein the air fired burners and oxy-fired reburn burners (14, 14a, 14b) are located on multiple walls of the furnace and a over fire air port (16, 16a, 16b) is located above the oxy-fired reburn burners (14, 14a, 14b).

4. The method of claim further comprising the step of operating the furnace as a tangentially firing unit, wherein the air fired burners (12, 12a, 12b), and oxy-fired reburn burners (14, 14a, 14b) are located in a tangential firing pattern and a over fire air port (16, 16a, 16b) is located above the oxy-fired reburn burners (14, 14a, 14b).

5. A method of controlling nitrogen oxides emissions resulting from the combustion of a fossil fuel in a utility boiler, the method including the step of staging combustion to prevent the formation of nitrogen oxides precursors by:
providing at least two rows of air fired burner (12, 12a, 12b), each of the burners being supplied with air and fossil fuel and combusted at a stoichiometry of less then 1.0, and
providing a row of overfire air ports (16, 16a, 16b) downstream of the last row of the at least two rows of air fired burners (12, 12a, 12b), the method further comprising:
providing a oxy-fired reburn burner (14, 14a, 14b) downstram of air fired burners (12, 12a, 12b) and upstream of the over fire air ports (16, 16a, 16b),
and providing the oxy-fired reburn burner (14, 14a, 14b), with a fossil fuel and a gaseous steam comprising at least 90% oxygen;
**characterised by**:
operating the oxy-fired reburn burner (14, 14a, 14b) to produce a combustion stoichiometry of between about 0.35 and 0.65 at the outlet of the oxy-fired reburn burner (14, 14a, 14b) and
providing the overfire air port (16, 16a, 16b) with sufficient air to create a combustion stoichiometry of greater then 1.10.

6. The method of claim 5 further comprising the step of operating the furnace a a single wall firing unit, wherein the air fired burner (12, 12a, 12b) and oxy-fired reburn burners (14, 14a, 14b) are located on a single wall of the furnace.

7. The method of claim 5 further comprising the step of operating the furnace as a opposed wall firing unit, wherein the air fired burners (12, 12a, 12b) and oxy-fired reburn burners (14, 14a, 14b) are located on multiple walls of the furnace.

8. The method of claim 5 further comprising the step of operating the furnace as a tangentially firing unit, wherein the air fired burners (12, 12a, 12b) and oxy-fired reburn burners (14, 14a, 14b) are located in a tangential firing pattern.

## Patentansprüche

1. Verfahren zum Reduzieren der Bildung von Stickoxydemissionen aus der Verbrennung eines fossilen Brennstoffs in einem stickstoffgeladenen Gas mit
Bereitstellen einer Feuerung, wobei fossiler Brennstoff verbrannt wird,
Bereitstellen einer oder mehrerer Reihen von luftbefeuerten Brennern (12, 12a, 12b),
Bereitstellen einer Reihe von sauerstoffbefeuerten Nachverbrennungsbrennern (14, 14a, 14b) stromabwärts der luftbefeuerten Brenner (12, 12a, 12b),
Bereitstellen einer Reihe von Überfeuerluftanschlüssen (16, 16a, 16b) stromabwärts der Reihe von sauerstoffbefeuerten Nachverbrennungsbrennern (14, 14a, 14b),
Versorgen der einen oder der mehreren Reihen von luftbefeuerten Brennern (12, 12a, 12b) mit Luft und einem fossilen Brennstoff in einem stöchiometrischen Verhältnis von weniger als 1,0,
Versorgen der sauerstoffbefeuerten Nachverbrennungsbrenner (14, 14a, 14b) mit einem fossilen Brennstoff und einem Gasstrom mit mindestens 90 % Sauerstoff,
**dadurch gekennzeichnet, dass** die sauerstoffbefeuerten Nachverbrennungsbrenner (14, 14a, 14b) mit dem fossilen Brennstoff und dem Gasstrom, der mindestens 90 % Sauerstoff aufweist, in ausreichender Menge versorgt werden, sodass eine Nachverbrennungsstöchiometrie zwischen ungefähr 0,35 und 0.65 erzeugt wird und dass
die Reihe von Überfeuerluftanschlüssen (16, 16a, 16b) mit ausreichend Luft versorgt wird, um eine Verbrennungsstöchiometrie über 1,10 stromabwärts von den Überfeuerluftanschlüssen (16, 16a, 16b) zu erzeugen.

2. Verfahren nach Anspruch 1 darüber hinaus mit dem Schritt des Betreibens der Befeuerung als eine Einwandfeuerungseinheit, wobei die luftbefeuerten Brenner (12, 12a, 12b) und die sauerstoffbefeuerten Nachverbrennungsbrenner (14, 14a, 14b) auf einer einzigen Wand der Feuerung angeordnet sind und ein Überfeuerluftanschluss (16, 16a, 16b) über den sauerstoffbefeuerten Nachverbrennungsbrennern (14, 14a, 14b) angeordnet ist.

3. Verfahren nach Anspruch 1 darüber hinaus mit dem Schritt des Betreibens der Feuerung als eine gegenüberliegende Wandfeuerungseinheit, wobei die luftbefeuerten Brenner und die sauerstoffbefeuerten Nachverbrennungsbrenner (14, 14a, 14b) auf mehreren Wänden der Feuerung angeordnet sind und ein Überfeuerluftanschluss (16, 16a, 16b) über den sauerstoffbefeuerten Nachverbrennungsbrennern (14, 14a, 14b) angeordnet ist.

4. Verfahren nach Anspruch 1 darüber hinaus mit dem Schritt des Betreibens der Feuerung als eine Tangentialfeuerungseinheit, wobei die luftbefeuerten Brenner (12, 12a, 12b) und die sauerstoffbefeuerten Nachverbrennungsbrenner (14, 14a, 14b) in einem Tangentialfeuerungsmuster angeordnet sind und ein Überfeuerluftanschluss (16, 16a, 16b) über den sauerstoffbefeuerten Nachverbrennungsbrennern (14, 14a, 14b) angeordnet ist.

5. Verfahren zum Steuern von Stickoxydemissionen, die aus der Verbrennung eines fossilen Brennstoffs in einem Hilfsboiler resultieren, wobei das Verfahren den Schritt einer Verbrennungsrückführung aufweist, sodass die Bildung von Stickoxidprecursoren verhindert wird durch:
Bereitstellen mindestens zweier Reihen von luftbefeuerten Brennern (12, 12a, 12b), wobei jeder der Brenner mit Luft und einem fossilen Brennstoff versorgt wird und bei einer Stöchiometrie von weniger als 1,0 verbrannt wird, und
Bereitstellen einer Reihe von Überfeuerluftanschlüssen (16, 16a, 16b) stromabwärts von der letzten Reihe der mindestens zwei Reihen von luftbefeuerten Brennern (12, 12a, 12b), wobei das Verfahren darüber hinaus aufweist:
Bereitstellen eines sauerstoffbefeuerten Nachverbrennungsbrenners (14, 14a, 14b) stromabwärts von luftbefeuerten Brennern (12, 12a, 12b) und stromaufwärts von den Überfeuerluftanschlüssen (16, 16a, 16b),
und Versorgen des sauerstoffbefeuerten Nachverbrennungsbrenners (14, 14a, 14b) mit einem fossilen Brennstoff und einem Gasstrom mit mindestens 90 % Sauerstoff,
**gekennzeichnet durch**:
Betreiben des sauerstoffbefeuerten Nachverbrennungsbrenners (14, 14a, 14b), sodass eine Verbrennungsstöchiometrie von zwischen ungefähr 0,35 und 0,65 an dem Auslass des sauerstoffbefeuerten Nachverbrennungsbrenners (14, 14a, 14b) erzeugt wird, und Versorgen der Überfeuerluftanschlüsse (16, 16a, 16b) mit ausreichend Luft, sodass eine Verbrennungsstöchiometrie von größer als 1,10 erzeugt wird.

6. Verfahren nach Anspruch 5 darüber hinaus mit dem Schritt des Betreibens der Feuerung als eine Einwandfeuerungseinheit, wobei die luftbefeuerten Brenner (12, 12a, 12b)und die sauerstoffbefeuerten Nachverbrennungsbrenner (14, 14a, 14b) auf einer einzigen Wand der Feuerung angeordnet sind.

7. Verfahren nach Anspruch 5 darüber hinaus mit dem Schritt des Betreibens der Feuerung als eine gegenüberliegende Wandfeuerungseinheit, wobei die luftbefeuerten Brenner (12, 12a, 12b) und die sauerstoffbefeuerten Nachverbrennungsbrenner (14, 14a, 14b) auf mehreren Wänden der Feuerung angeordnet sind.

8. Verfahren nach Anspruch 5 darüber hinaus mit dem Schritt des Betreibens der Feuerung als eine Tangentialfeuerungseinheit, wobei die luftbefeuerten Brenner (12, 12a, 12b) und die sauerstoffbefeuerten Nachverbrennungsbrenner (14, 14a, 14b) in einem tangentialen Feuerungsmuster angeordnet sind.

## Revendications

1. Procédé pour réduire la formation d'émissions d'oxydes d'azote due à la combustion d'un combustible fossile dans un gaz chargé d'azote, consistant à
disposer d'un four dans lequel le combustible fossile est brûlé,
disposer d'une ou plusieurs rangées de brûleurs alimentés en air (12, 12a, 12b),
disposer d'une rangée de brûleurs re-brûleurs alimentés en oxydant (14, 14a, 14b) en aval des brûleurs alimentés en air (12, 12a, 12b),
disposer d'une rangée de sorties d'air de combustion (16, 16a, 16b) en aval de la rangée de brûleurs re-brûleurs alimentés en oxydant (14, 14a, 14b),
fournir de l'air et un combustible fossile à la ou aux rangées de brûleurs alimentés en air (12, 12a, 12b), à une stoechiométrie inférieure à 1,0,
fournir un combustible fossile et un courant gazeux comprenant au moins 90 % d'oxygène aux brûleurs re-brûleurs alimentés en oxydant (14, 14a, 14b),
**caractérisé en ce que** les brûleurs re-brûleurs alimentés en oxydant (14, 14a, 14b) sont alimentés avec le combustible fossile et le courant gazeux comprenant au moins 90 % d'oxygène en une quantité suffisante pour produire une stoechiométrie de re-combustion comprise entre environ 0,35 et 0,65, et
**en ce que** la rangée de sortie d'air de combustion (16, 16a, 16b) est alimentée avec suffisamment d'air pour produire une stoechiométrie de combustion supérieure à 1,10 en aval des sorties d'air de combustion (16, 16a, 16b).

2. Procédé selon la revendication 1, comprenant en outre l'étape consistant à faire fonctionner le four comme une unité de combustion à une seule paroi, dans laquelle les brûleurs alimentés en air (12, 12a, 12b) et les brûleurs re-brûleurs alimentés en oxydant (14, 14a, 14b) sont situés sur une seule paroi du four et une sortie d'air de combustion (16, 16a, 16b) est situé au-dessus des brûleurs re-brûleurs alimentés en oxydant (14, 14a, 14b).

3. Procédé selon la revendication 1, comprenant en outre l'étape consistant à faire fonctionner le four comme une unité de combustion à parois opposées, où les brûleurs alimentés en air et les brûleurs re-brûleurs alimentés en oxydant (14, 14a, 14b) sont situés sur de multiples parois du four et une sortie d'air de combustion (16, 16a, 16b) est situé au-dessus des brûleurs re-brûleurs alimentés en oxydant (14, 14a, 14b).

4. Procédé selon la revendication 1, comprenant en outre l'étape consistant à faire fonctionner le four comme une unité de combustion tangentielle, dans lequel les brûleurs alimentés en air (12, 12a, 12b) et les brûleurs re-brûleurs alimentés en oxydant (14, 14a, 14b) sont situés sur un motif de combustion tangentielle et une sortie d'air de combustion (16, 16a, 16b) est situé au-dessus des brûleurs re-brûleurs alimentés en oxydant (14, 14a, 14b).

5. Procédé pour réguler les émissions d'oxydes d'azote résultant de la combustion d'un combustible fossile dans une chaudière polyvalente, le procédé comprenant l'étape consistant à étager la combustion pour empêcher la formation de précurseurs d'oxydes d'azote en :
disposant au moins deux rangées de brûleurs alimentés en air (12, 12a, 12b), chacun des brûleurs étant alimenté en air et en combustible fossile et réalisant la combustion à une stoechiométrie inférieure à 1,0, et
disposant une rangée d'orifices d'air additionnel de combustion (16, 16a, 16b) en aval de la dernière rangée parmi les au moins deux rangées de brûleurs alimentés en air (12, 12a, 12b), le procédé comprenant en outre les étapes consistant à :
disposer un brûleur re-brûleur alimenté en oxydant (14, 14a, 14b) en aval des brûleurs alimentés en air (12, 12a, 12b) et en amont des sorties d'air (16, 16a, 16b);
et fournir un combustible fossile et un courant gazeux comprenant au moins 90 % d'oxygène au brûleur re-brûleur alimenté en oxydant (14, 14a, 14b) ;
**caractérisé par** :
la mise en oeuvre du brûleur re-brûleur alimenté en oxydant (14, 14a, 14b) pour produire une stoechiométrie de combustion comprise entre environ 0,35 et 0,65 à la sortie du brûleur re-brûleur alimenté en oxydant (14, 14a, 14b), et
la fourniture aux sorties d'air (16, 16a, 16b) suffisamment d'air pour créer une stoechiométrie de combustion supérieure à 1,10.

6. Procédé selon la revendication 5, comprenant en outre l'étape consistant à faire fonctionner le four comme une unité de combustion à une seule paroi, dans lequel les brûleurs alimentés en air (12, 12a, 12b) et les brûleurs re-brûleurs alimentés en oxydant (14, 14a, 14b) sont situés sur une seule paroi du four.

7. Procédé selon la revendication 5, comprenant en outre l'étape consistant à faire fonctionner le four comme une unité de combustion à parois opposées, dans lequel les brûleurs alimentés en air (12, 12a, 12b) et les brûleurs re-brûleurs alimentés en oxydant (14, 14a, 14b) sont situés sur de multiples parois du four.

8. Procédé selon la revendication 5, comprenant en outre l'étape consistant à faire fonctionner le four comme une unité de combustion tangentielle, dans lequel les brûleurs alimentés en air (12, 12a, 12b) et les brûleurs re-brûleurs alimentés en oxydant (14, 14a, 14b) sont situés sur un motif de combustion tangentielle.
